# EUROPÄISCHE PATENTSCHRIFT

(11) **EP 3 441 331 B1**
(45) Veröffentlichungstag und Bekanntmachung des Hinweises auf die Patenterteilung: **28.09.2022**
(21) Anmeldenummer: 17185625.5
(22) Anmeldetag: 09.08.2017
(51) Int. Cl.: B65G 67/20, B65G 67/08, G06Q 10/06

(54) **VERFAHREN ZUM HANDLING VON SORTIERSTÜCKEN MIT ÜBERWACHTEN TELESKOPFÖRDERBÄNDERN**
METHOD FOR HANDLING SORTING PIECES WITH MONITORED TELESCOPIC CONVEYOR BELTS
PROCÉDÉ DE MANIPULATION D'ARTICLES À TRIER AU MOYEN DE BANDES TRANSPORTEUSES TÉLESCOPIQUES SURVEILLÉES

(43) Veröffentlichungstag der Anmeldung: 13.02.2019
(73) Patentinhaber: Siemens Aktiengesellschaft, 80333 München (DE)
(72) Erfinder: BECHER, Jörn, 55127 Mainz (DE)
(74) Vertreter: Siemens Patent Attorneys

(56) Entgegenhaltungen:
- WO-A1-2015/000752
- US-A- 5 685 416
- US-A- 5 831 540
- US-A1- 2015 352 721
- US-A1- 2017 073 175

## Beschreibung

Die Erfindung betrifft ein Verfahren zum Beladen von Sortierstücken in ein Transportvolumen bzw. zum Entladen von Sortierstücken aus dem Transportvolumen.

US 5 685 416 A offenbart ein Verfahren zum Beladen von Sortierstücken in ein Transportvolumen bzw. zum Entladen von Sortierstücken aus dem Transportvolumen, umfassend die folgenden Schritte für einen Beladevorgang des Transportvolumens:
a) teleskopartiges Verstellen eines transportvolumenseitigen Endes eines Teleskopförderers in das Transportvolumen hinein zum Erreichen einer geeigneten Beladeposition;
b) Heranführen der Sortierstücke auf dem Teleskopförderer bis zu deren transportvolumenseitigem Ende;
c) Entladen der herangeführten Sortierstücke in das Transportvolumen;
d) Anpassen der Verstellung des transportvolumenseitigen Endes des Teleskopförderers in Abhängigkeit vom fortschreitenden Beladezustand zur Anpassung der Beladeposition;
e) Erfassen der Verstellposition durch eine Steuerungseinheit, und/oder umfassend die folgenden Schritte für einen Entladevorgang des Transportvolumens:
   g) Positionieren eines transportvolumenseitigen Endes eines Teleskopförderers relativ zu dem Transportvolumen zum Erreichen einer geeigneten Entladeposition;
   h) Entladen der Sortierstücke auf das transportvolumenseitige Ende des Teleskopförderers;
   i) Abführen der Sortierstücke auf dem Teleskopförderer bis zu deren dem Transportvolumen gegenüberliegenden Ende;
   j) teleskopartiges Verstellen des transportvolumenseitigen Endes des Teleskopförderers in Abhängigkeit vom fortschreitenden Entladezustand zur Anpassung der Entladeposition;
   k) Erfassen der Verstellposition durch eine Steuerungseinheit.

Bei Kurier-, Paket- und Express-Logistikdienstleistern müssen in der Regel grosse Mengen von Päckchen und Paketen (allgemein Sortierstücke oder Sortiergut genannt) aus Transportvolumen, wie LKW-Anhängern, Bahncontainern, Flughafen-Dollies, ausgeladen, sortiert und entsprechend der durchgeführten Sortierung wieder in die Transportvolumen verladen werden. Der Ent- und Beladevorgang erfolgt dabei meist an sogenannten Teleskopförderbändern (Teleskopbänder, Teleskopförderer), an denen die Transportvolumen an grossen Eingangstoren der Sortierzentren bereitgestellt werden und von Hand auf Förderbänder aufgelegt (Entladung) oder von diesen von Förderbändern entnommen und in die Transportvolumen gestapelt werden(Beladung). Es ist einleuchtend, dass aufgrund der Grösse, besonders der Länge, der Transportvolumen besonders dann grosse Wege für das Personal bestehen, wenn die Transportvolumen zunehmend entleert oder anfänglich beladen werden.

Zur Abkürzung dieser Wege verfügen die Förderbänder bei Ent- sowie Beladung über einen teleskop-artig ausgeführten Bereich, der in die Transportvolumina hineingefahren bzw. aus ihnen wieder herausgefahren werden kann. Der sich am transportvolumenseitigen Ende dieses teleskopierbaren Bereichs befindliche Mitarbeiter kann sich so immer in eine für ihn optimale Belade- und/oder Entladeposition relativ zum Füllstand des Transportvolumens bringen. Ein dem teleskopierbaren Bereich zueigenes Förderband fördert in jedem Fall die Sortierstücke bis zu diesem transportvolumenseitigen Ende des teleskopierbaren Bereichs bzw. von diesem weg, sodass der Mitarbeiter die Sortierstücke immer in unmittelbarer Nähe seines Standorts auf das Förderband auflegen, bzw. von diesem entnehmen kann.

Zur Erzielung eines reibungslosen Betriebsauflaufs ist es besonders vorteilhaft, wenn die zur Verfügung stehenden Mitarbeiter in Abhängigkeit von den zu entladenden und/oder zu beladenden Sortierstücken möglichst optimal nach ihrer Verfügbarkeit eingesetzt werden können. Hierzu müssen im Entladebereich geleerte Transportvolumen von der Hoflogistik möglichst rasch gegen volle Transportvolumen ausgetauscht werden. Im Beladebereich müssen volle Transportvolumen möglichst rasch gegen leere getauscht werden.

Leider kommt es heute in derartigen Logistikzentren sehr oft vor, dass die Hoflogistik durch diese Auswechslungen temporär überlastet ist und das Hallenpersonal in Folge nicht ausgelastet ist. Oft kommt es auch zu einem Volllaufen von Endstellen und auf den Sortieranlagen zu rezirkulierenden Sortierstücken aufgrund überlasteter Endstellen, was sich nachteilig auf noch laufende Sortiervorgänge auswirkt. So kann es auch vorkommen, dass Sortierstücke nach der x-ten Rezirkulation in den Überlauf gehen und dann manuell bearbeitet werden müssen. All diese vorgenannten Fälle führen zu einer Verringerung der Produktivität und des Durchsatzes.

Dadurch, dass die Hoflogistik-Bedarfe aufgrund voller bzw. leerer Transportvolumen heute nicht vorhersagbar bzw. steuerbar sind, sind in Logistikzentren zu Stosszeiten oft Rezirkulationsraten von über 30% zu beobachten, was einem ebenso grossen Produktivitätseinbruch entspricht.

Zur Vermeidung dieser Produktivitätseinbussen wurden sogar bereits Kamerasysteme oder Ultraschallsystem eingesetzt, die den Füllgrad der Transportvolumen messen können. Diese Lösungen erfordern jedoch vergleichsweise hohe einmalige Investitionskosten und ziehen ebenfalls Kosten für die Instandhaltung und Materialwirtschaft nach sich. Aus diesem Grund haben sich derartige Systeme auch bisher nicht am Markt durchsetzen können.

Der vorliegenden Erfindung liegt daher die Aufgabe zugrunde, ein Verfahren zum Beladen von Sortierstücken in ein Transportvolumen bzw. zum Entladen von Sortierstücken aus dem Transportvolumen anzugeben, bei der der Bedarf an Personal und Hofverkehr entsprechend der zur Verfügung stehenden Ressourcen und entsprechend des anfallenden Sortier- und Verteilbedarfs optimal gesteuert werden kann.

Diese Aufgabe wird erfindungsgemäss durch ein Verfahren zum Beladen von Sortierstücken in ein Transportvolumen bzw. zum Entladen von Sortierstücken aus dem Transportvolumen gelöst, umfassend die folgenden Schritte für einen Entladevorgang des Transportvolumens:
a) Positionieren eines transportvolumenseitigen Endes eines Teleskopförderers relativ zu dem Transportvolumen zum Erreichen einer geeigneten Entladeposition;
b) Entladen der Sortierstücke auf das transportvolumenseitige Ende des Teleskopförderers;
c) Abführen der Sortierstücke auf dem Teleskopförderer bis zu deren dem Transportvolumen gegenüberliegenden Ende;
d) Einteleskopieren des transportvolumenseitigen Endes in das Transportvolumen in Abhängigkeit vom fortschreitenden Entladezustand zur Anpassung der Entladeposition;
e) Erfassen der Verstellposition durch eine Steuerungseinheit; und
f) Bestimmen der voraussichtlich verbleibenden Restentladezeitdauer des Transportvolumen aufgrund der erfassten Verstellposition und ggfs. deren zeitlichen Verlaufs.

und/oder umfassend die folgenden Schritte für einen Beladevorgang des Transportvolumens:
g) teleskopartiges Verstellen eines transportvolumenseitigen Endes eines Teleskopförderers in das Transportvolumen hinein zum Erreichen einer geeigneten Beladeposition;
h) Heranführen der Sortierstücke auf dem Teleskopförderer bis zu dessen transportvolumenseitigem Ende;
i) Entladen der herangeführten Sortierstücke in das Transportvolumen;
j) Anpassen der Verstellung des transportvolumenseitigen Endes des Teleskopförderers in Abhängigkeit vom fortschreitenden Beladezustand zur Anpassung der Beladeposition;
k) Erfassen der Verstellposition durch eine Steuerungseinheit; und
l) Bestimmen der voraussichtlich verbleibenden Restbeladezeitdauer des Transportvolumens aufgrund der erfassten Verstellposition und ggfs. deren zeitlichen Verlaufs,
Auf diese Weise ist es möglich, die aktuelle Verstellposition und ggfs. den zeitlichen Verlauf der Teleskopierung zu erfassen und die Steuerung des Personalbedarfs und des Betriebsauflaufs einfliessen zu lassen. Auf diese Weise können Engpässe/Leerlauf beim Personal und beim Wechsel der Transportvolumen vermieden und somit der Betriebsablauf vergleichmässigt werden. Somit kann beispielsweise auch direkt in die Auflegeleistung beim Beladen und/oder die Abtrageleistung beim Entladen eingegriffen werden und Pausen können partiell vorgezogen oder nach hinten geschoben werden. Es können weiter zusätzliche Rangierkräfte und/oder LKW-Fahrer für Anstell- und Abzugsaufträge für die Transportvolumen herangezogen werden.

Das vorstehend genannte Verfahren lässt sich mit besonders geringen Investitionskosten durchführen, wenn die Verstellposition bestimmt wird, indem die Umdrehungszahl und/oder die Ansteuerungsdauer eines Antriebsmotors zur teleskopartigen Verstellung des transportvolumenseitigen Endes des Teleskopförderers erfasst wird. Auf diese Weise müssen keine Sensoren zur Erfassung der Position des telekopierbaren Bereichs des Teleskopförderers montiert und gewartet werden. Grundsätzlich können so auch auf diese Weise bestimmte Verstellpositionen vordefiniert werden, deren Erreichen direkte Meldungen an die Prozesssteuerung auslösen, wie z.B. bis zur vollständigen Be-/Entladung des Transportbehälters voraussichtlich noch 15 Minuten oder dergleichen, mit denen die Prozessteuerung dann gezielte Folgemassnahmen einleitet, wie z.B. Bereitstellen eines LKW-Fahrers zum Abtransportieren des Transportvolumens oder Bereitstellen von Sortierstücken zum (Wieder-)Beladen des demnächst entladenen Transportvolumens.

Zusätzlich oder auch alternativ hierzu kann auch mindestens ein Sensor angeordnet sein, der das Erreichen von mindestens einer vorbestimmten Verstellposition beim Belade- und/oder beim Entladevorgang detektiert.

Besonders vorteilhaft für den Betriebsablauf kann es sein, wenn das Verfahren in einer vorteilhaften Ausgestaltung der Erfindung das Veranlassen von Massnahmen zum Abführen des Transportvolumens in Antwort auf die ermittelte Restbeladezeitdauer und/oder Veranlassen von Massnahmen zum Abführen des Transportvolumens oder zur Wiederbefüllung des Transportvolumens in Antwort auf die ermittelte Restentladezeitdauer vorsieht.

Vorteilhafte Ausgestaltungen der vorliegenden Erfindung werden nachfolgend detailliert mit Bezug auf die Zeichnung erläutert. Dabei zeigen:
- Figur 1: in schematischer Darstellung eine seitliche Ansicht eines Teleskopförderers zu Beginn eines Beladevorgangs für einen LKW-Trailer (nachfolgend kurz Trailer genannt;
- Figur 2: in schematischer Darstellung die seitliche Ansicht nach Figur 1 mit ausgezogenem Teleskopförderer unmittelbar nach Beginn des Beladevorgangs;
- Figur 3: in schematischer Darstellung die seitliche Ansicht nach Figur 1 mit einem weitgehend wieder eingefahrenen Teleskopförderer kurz vor dem Abschluss des Beladevorgangs; und
- Figur 4: in schematischer Darstellung die seitliche Ansicht nach Figur 1 mit einem komplett wieder eingefahrenen Teleskopförderer am Ende des Beladevorgangs.

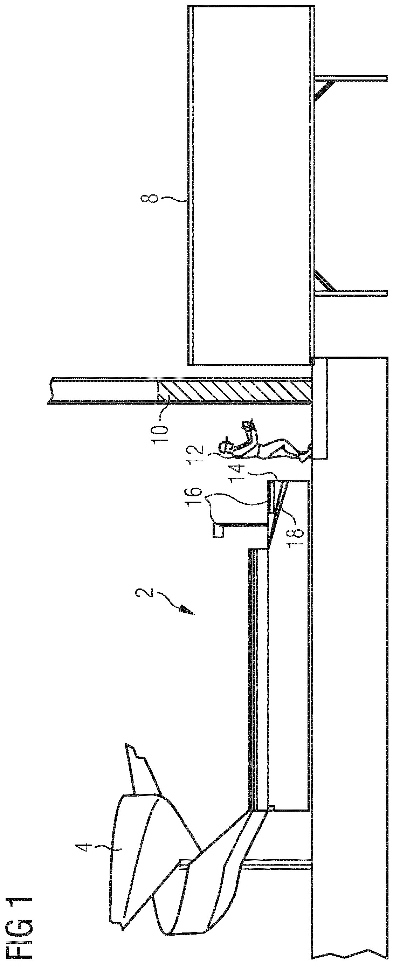

Figur 1 zeigt schematisch eine seitliche Ansicht eines Teleskopsförderers 2 in einem hier nicht weiter dargestellten Logistik- und Sortierzentrum für Sortiergüter, wie Päckchen, Pakete, Briefsendungen und dergleichen. In der zeichnerischen Darstellung links des Teleskopförderers 2 ist eine Rutsche 4 vorgesehen, mit der Sortiergüter 6 auf den Teleskopförderer 2 geführt werden können. In der zeichnerischen Darstellung rechts des Teleskopförderers 2 befindet sich ein Trailer 8, der momentan leer ist und durch ein Ladetor 10 von einem Mitarbeiter 12 des Zentrums getrennt ist. Der Teleskopförderer 2 weist an seinem trailerseitigen Ende 14 eine Bedieneinheit 16 auf, die eine hier nicht im Detail dargestellte Steuereinheit für einen verfahrbaren Teleskopauszug 18 des Telskopförderers 2 aufweist.

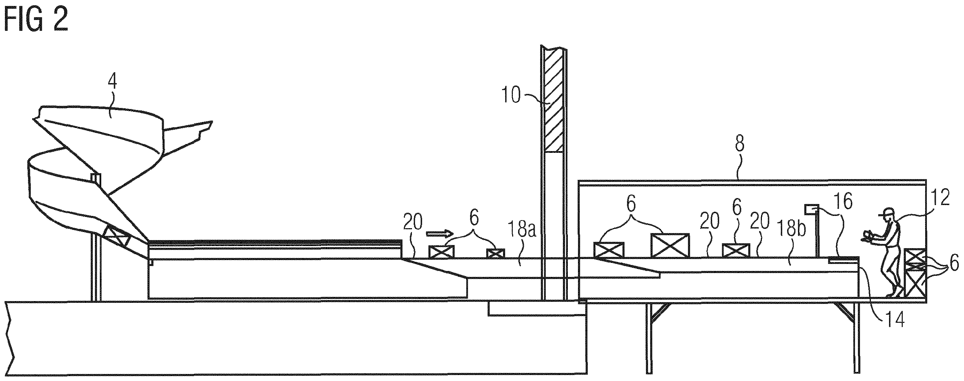

Zum Beladen des Trailers 8 öffnet der Mitarbeiter 12 das Ladetor 10 und fährt den Teleskopauszug 18 in den hinteren Teil des Trailers 8, um dort aus einer optimalen Beladeposition heraus die über ein Förderband 20 des Teleskopfördererss 2 herangeführten Sortierstücke 6 in den Trailer 8 einzuladen. Diese Situation ist in der seitlichen Ansicht gemäss der Figur 2 schematisch gezeigt. Beim Ausfahren des Teleskopauszugs 18, der zwei teleskopierbare Abschnitte 18a, 18b umfasst, erfasst die Steuerungseinheit die Umdrehungszahl des Elektromotors zum Ausfahren und Einziehen des Teleskopauszugs 18. Zudem wird die Zeit der Motoransteuerung gemessen, sodass aus diesen beiden Messgrössen die aktuelle Position des trailerseitigen Endes 14 des Teleskopauszugs 18 bestimmt werden kann.

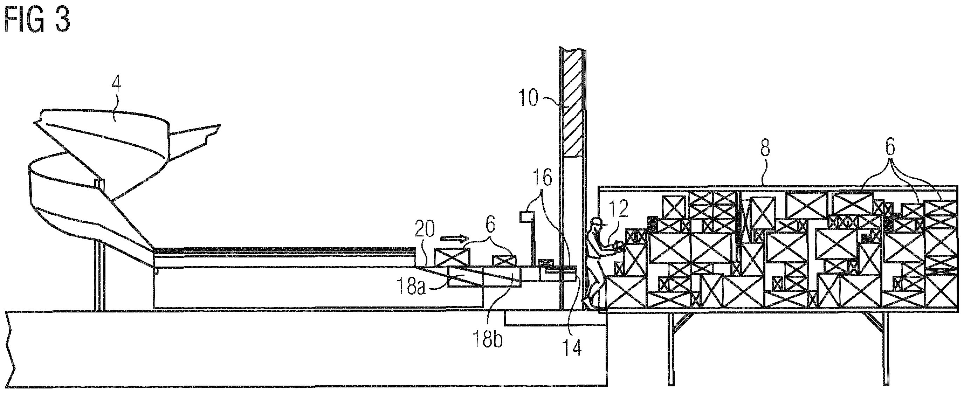

Mit fortschreitender Beladung des Trailers 8 fährt der Mitarbeiter 12 den Teleskopauszug 18 nun immer weiter wieder ein, um sich stets in einer gewünschten Beladeposition nicht zu nah, aber auch nicht zu weit weg vom aktuellen Stapelort zu befinden. Kurz vor der vollständigen Beladung des Trailers 8 befindet sich der Teleskopauszug 18 beinahe wieder in dem vollständig eingefahrenen Zustand, wie dies in der Figur 3 in schematischer seitlicher Ansicht gezeigt ist. Bereits etwa eine gewisse Position des Teleskopauszugs 18 vorher (z.B. ein halber Meter vorher oder ein Meter vorher oder auch zwei Meter vorher) erfasst die Steuereinheit diese Position als eine vordefinierte Position, an welcher nun ein Signal für die weitere Handhabung des Beladevorgangs ausgelöst wird. Dieses Signal kann beispielsweise den Inhalt haben, dass es bei dem jetzigen Tempo der Beladung, das anhand des zeitlichen Verlaufs der Änderung der Position des Teleskopauszugs 18 bestimmt werden kann, noch voraussichtlich 15 Minuten/30 Minuten dauern wird, bis der Trailer 8 vollständig gefüllt sein wird. Der Betreiber des Zentrums erhält so frühzeitig die Information, dass der Trailer 8 in Kürze ausgetauscht werden muss, weil sein Aufnahmevolumen erschöpft sein wird. Somit können ein leerer Ersatz-Trailer und ein Fahrer mit genügend Vorlaufzeit organisiert und dann rechtzeitig zur Verfügung gestellt werden.

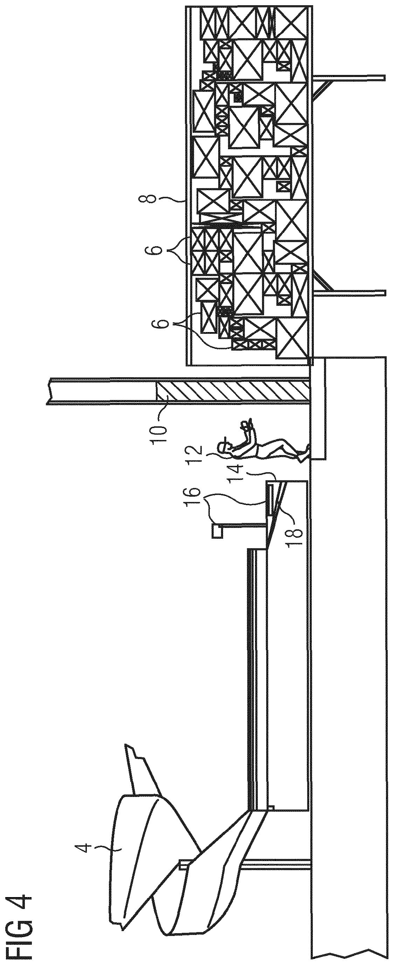

Dieser Zustand des als komplett gefüllt angesehenen Trailers 8 ist in der seitlichen Ansicht der Figur 4 schematisch dargestellt. Der Trailer 8 ist gefüllt und verschlossen, ebenso wie das Ladetor 10. Der Teleskopauszug 18 befindet sich nun wieder im komplett eingefahrenen Zustand, wie dies in Figur 1 für den Beginn des Beladevorgangs dargestellt worden ist.

Im vorliegenden Ausführungsbeispiel wird der Grad des Austeleskopierung ständig erfasst, wie weiter oben beschrieben. Sowohl die jeweiligen Anfangs- und Endpunkte des Teleskopauszug 18 als jeweils eine spezielle Belade- und eine spezielle Entladeposition für den Teleskopauszug 18 sind in der Steuereinheit hinterlegt. Bei Ersteren weiss die Steuereinheit, dass nun eine Beladung abgeschlossen oder eine Entladung beginnt bzw. eine Beladung beginnt und eine Entladung abgeschlossen ist. Bei Letzteren wird ein Signal getriggert, die die Betreiber des Zentrums zu entsprechenden Nachfolgeaktionen auffordern, wie z.B. Trailer ersetzen, Fahrer bereitstellen oder dergleichen. Zusätzlich kann über die Ein-/Austeleskopiergeschwindigkeit über ein vorgegebenes Zeitintervall, wie z.B. 1/3/5/10/15 Minuten ein Prognosewert bestimmt werden, wann der Trailer vollständig gefüllt oder vollständig entleert sein wird. Auf diese Weise kann nun vergleichsweise präzise prognostiziert werden, wann wie viele und welche Transportaufträge für die Trailer 8 und deren Ersatz-Trailer anfallen werden.

Das hier vorstehend beschriebene Verfahren ist beispielhaft für einen Beladevorgang. Ein Entladevorgang würde in genau umgekehrter Weise ablaufen, wobei der Mitarbeiter 12 die Sortierstücke 6 aus dem Trailer 8 entnimmt und auf das trailerseitige Ende 14 des Teleskopauszugs 18 auflegt. Das Förderband 20 fördert die Sortierstücke 6 dann in das Zentrum, wobei die Rutsche 4 dann gegen eine Weiterverarbeitungsvorrichtung, wie ein Zwischenspeicher und/oder eine Aufgabestelle für eine Paketsortieranlage, ausgetauscht wird. Dies kann durch Verschwenken des Telekopförderers passieren oder an speziellen Endladestellen, die von vornherein derartige Weiterverarbeitungsvorrichtungen anstelle einer Paketzuführung, z.B.der Paketrutsche 4, aufweisen, was eigentlich auch der typische Ist-Zustand in derartigen Zentren ist. Mit fortschreitender Entladung teleskopiert der Mitarbeiter 12 den Teleskopauszug 18 immer weiter in das Transportvolumen 8 hinein, um stets eine für ihn ergonomisch sinnvolle Entladeposition einnehmen zu können. Auch hier kann die Position des Teleskopauszugs 18 erfasst und für die Prognose genutzt werden, wann der Trailer 8 voraussichtlich entladen sein wird. Daraus ergeben sich die frühzeitigen Möglichkeiten für den Betreiber den Abtransport des leeren Trailer 8 bzw. dessen Wiederbeladung (wenn im Betriebsablauf gewünscht) entsprechend zu organisieren.

## Patentansprüche

1. Verfahren zum Beladen von Sortierstücken (6) in ein Transportvolumen (8) bzw. zum Entladen von Sortierstücken (6) aus dem Transportvolumen (8), umfassend die folgenden Schritte für einen Beladevorgang des Transportvolumens (8):
a) teleskopartiges Verstellen eines transportvolumenseitigen Endes (14) eines Teleskopförderers (2) in das Transportvolumen (8) hinein zum Erreichen einer geeigneten Beladeposition;
b) Heranführen der Sortierstücke (6) auf dem Teleskopförderer (2) bis zu deren transportvolumenseitigem Ende (14);
c) Entladen der herangeführten Sortierstücke (6) in das Transportvolumen (8);
d) Anpassen der Verstellung des transportvolumenseitigen Endes (14) des Teleskopförderers (2) in Abhängigkeit vom fortschreitenden Beladezustand zur Anpassung der Beladeposition;
e) Erfassen der Verstellposition durch eine Steuerungseinheit; und
f) Bestimmen der voraussichtlich verbleibenden Restbeladezeitdauer des Transportvolumens (8) aufgrund der erfassten Verstellposition und ggfs. deren zeitlichen Verlaufs,
und/oder umfassend die folgenden Schritte für einen Entladevorgang des Transportvolumens (8):
g) Positionieren eines transportvolumenseitigen Endes (14) eines Teleskopförderers (2) relativ zu dem Transportvolumen (8) zum Erreichen einer geeigneten Entladeposition;
h) Entladen der Sortierstücke (6) auf das transportvolumenseitige Ende (14) des Teleskopförderers (2);
i) Abführen der Sortierstücke (6) auf dem Teleskopförderer (2) bis zu deren dem Transportvolumen (8) gegenüberliegenden Ende;
j) teleskopartiges Verstellen des transportvolumenseitigen Endes (14) des Teleskopförderers (2) in Abhängigkeit vom fortschreitenden Entladezustand zur Anpassung der Entladeposition;
k) Erfassen der Verstellposition durch eine Steuerungseinheit; und
l) Bestimmen der voraussichtlich verbleibenden Restentladezeitdauer des Transportvolumen (8) aufgrund der erfassten Verstellposition und ggfs. deren zeitlichen Verlaufs.

2. Verfahren nach Anspruch 2,
**dadurch gekennzeichnet, dass**
die Verstellposition bestimmt wird, indem die Umdrehungszahl und/oder die Ansteuerungsdauer eines Antriebsmotors zur teleskopartigen Verstellung des transportvolumenseitigen Endes (14) der Wechselbrücke (2) erfasst wird.

3. Verfahren nach Anspruch 2 oder 3,
**dadurch gekennzeichnet, dass**
Sensoren angeordnet sind, die das Erreichen von mindestens einer vorbestimmten Verstellposition beim Belade- und/oder beim Entladevorgang detektieren.

4. Verfahren nach einem der vorangehenden Ansprüche,
**dadurch gekennzeichnet, dass**
Veranlassen von Massnahmen zum Abführen des Transportvolumens (8) in Antwort auf die ermittelte Restbeladezeitdauer und/oder Veranlassen von Massnahmen zum Abführen des Transportvolumens (8) oder zur Wiederbeladung des Transportvolumens (8) in Antwort auf die ermittelte Restentladezeitdauer.

## Claims

1. Method for loading items to be sorted (6) into a transport volume (8) or for unloading items to be sorted (6) from the transport volume (8), comprising the following steps for a loading procedure of the transport volume (8):
a) telescopically adjusting a transport volume-side end (14) of a telescopic conveyor (2) into the transport volume (8) in order to reach a suitable loading position;
b) introducing the items to be sorted (6) on the telescopic conveyor (2) up to the transport volume-side end (14) thereof;
c) unloading the introduced items to be sorted (6) into the transport volume (8);
d) adapting the adjustment of the transport volume-side end (14) of the telescopic conveyor (2) as a function of the ongoing loading state in order to adapt the loading position;
e) acquiring the adjusted position by way of a control unit; and
f) determining the expected residual loading time remaining for the transport volume (8) on the basis of the acquired adjusted position and, optionally, the time profile thereof, and/or comprising the following steps for an unloading procedure of the transport volume (8):
g) positioning a transport volume-side end (14) of a telescopic conveyor (2) relative to the transport volume (8) in order to reach a suitable unloading position;
h) unloading the items to be sorted (6) at the transport volume-side end (14) of the telescopic conveyor (2);
i) discharging the items to be sorted (6) on the telescopic conveyor (2) up to the end thereof opposite the transport volume (8);
j) telescopically adjusting the transport volume-side end (14) of the telescopic conveyor (2) as a function of the ongoing unloading state in order to adapt the unloading position;
k) acquiring the adjusted position by way of a control unit; and
l) determining the expected residual unloading time remaining for the transport volume (8) on the basis of the acquired adjusted position and, optionally, the time profile thereof.

2. Method according to claim 2,
**characterised in that**
the adjusted position is determined by the rotational speed and/or the activation duration of a drive motor for telescopic adjustment of the transport volume-side end (14) of the telescopic conveyor (2) being acquired.

3. Method according to claim 2 or 3,
**characterised in that**
sensors are arranged which detect when at least one predetermined adjusted position is reached during the loading and/or unloading procedure.

4. Method according to one of the preceding claims,
**characterised in that**
prompting of measures for discharging the transport volume (8) as a response to the identified remaining loading time and/or prompting of measures for discharging the transport volume (8) or for reloading the transport volume (8) as a response to the identified remaining loading time.

## Revendications

1. Procédé de chargement d'articles de tri (6) dans un volume de transport (8) ou resp. de déchargement d'articles de tri (6) d'un volume de transport (8), comprenant les étapes suivantes pour un processus de chargement du volume de transport (8) :
a) Déplacement télescopique d'une extrémité (14) côté du volume de transport d'un convoyeur télescopique (2) dans le volume de transport (8) jusqu'à une position de chargement adéquate ;
b) Acheminement des articles de tri (6) sur le convoyeur télescopique (2) jusqu'à ladite extrémité (14) côté du volume de transport ;
c) Déchargement des articles de tri (6) acheminés dans le volume de transport (8) ;
d) Adaptation du déplacement de l'extrémité (14) côté du volume de transport du convoyeur télescopique (2) en fonction de l'évolution de l'état de chargement pour adapter la position de chargement ;
e) Saisie de la position de déplacement par une unité de commande ; et
f) Détermination de la durée restante attendue de chargement du volume de transport (8) sur la base de la position de déplacement saisie et éventuellement de son évolution temporelle,
et/ou comprenant les étapes suivantes pour un processus de déchargement du volume de transport (8) :
g) Positionnement d'une extrémité (14) côté du volume de transport d'un convoyeur télescopique (2) par rapport au volume de transport (8) jusqu'à une position de déchargement adéquate ;
h) Déchargement des articles de tri (6) sur l'extrémité (14) côté du volume de transport du convoyeur télescopique (2) ;
i) Extraction des articles de tri (6) sur le convoyeur télescopique (2) jusqu'à son extrémité en face du volume de transport (8) ;
j) Déplacement télescopique de l'extrémité (14) côté du volume de transport du convoyeur télescopique (2) en fonction de l'évolution de l'état de déchargement pour adapter la position de déchargement ;
k) Saisie de la position de déplacement par une unité de commande ; et
l) Détermination de la durée restante attendue de déchargement du volume de transport (8) sur la base de la position de déplacement saisie et éventuellement de son évolution temporelle.

2. Procédé selon la revendication 2, **caractérisé en ce que** la position de déplacement est déterminée par saisie du nombre de tours de rotation et/ou de la durée de commande d'un moteur d'entraînement pour le déplacement télescopique de l'extrémité (14) côté du volume de transport des ponts amovibles (2).

3. Procédé selon la revendication 2 ou 3, **caractérisé en ce que** des capteurs sont disposés qui détectent l'arrivée à au moins une position de déplacement prédéterminée au cours du processus de chargement et/ou de déchargement.

4. Procédé selon l'une des revendications précédentes **caractérisé par** la réalisation de mesures pour l'évacuation du volume de transport (8) en réponse à la durée restante déterminée de chargement et/ou par la réalisation de mesures pour l'évacuation du volume de transport (8) ou pour le rechargement du volume de transport (8) en réponse à la durée restante déterminée de déchargement.
